# EUROPEAN PATENT SPECIFICATION

(11) **EP 0 491 241 B1**
(45) Date of publication and mention of the grant of the patent: **12.10.1994**
(21) Application number: 91120888.2
(22) Date of filing: 05.12.1991
(51) Int. Cl.: B60D 1/52, F16B 3/00

(54) **Vehicle hitch assembly, including a detachable towing hook**
Fahrzeugkupplungsvorrichtung mit abnehmbarer Anhängerkupplung
Ensemble de couplage de véhicule avec un attelage amovible

(30) Priority: 18.12.1990 FI 906235
(43) Date of publication of application: 24.06.1992
(73) Proprietor: PURSO OY VEME, 23800 Laitila (FI)
(72) Inventor: Laitiomäki, Tuomo, SF-23800 Laitila (FI)
(74) Representative: Lins, Edgar, Dipl.-Phys. Dr.jur.

(56) References cited:
- EP-A- 0 151 099
- EP-A- 0 160 934
- EP-A- 0 301 153
- DE-U- 8 907 012
- FR-A- 2 390 304
- US-A- 2 531 859
- US-A- 4 540 194

## Description

A vehicle hitch assembly, including a detachable towing hook for coupling a caravan, a trailer or a like towable apparatus to a vehicle, comprising:
- said towing hook whose body section is on the one hand provided with attachment members for coupling the towing hook detachably in connection with a vehicle and on the other hand with a towing ball or a like, said attachment members included in the body section being located at a distance from each other in the longitudinal direction of said body section, and
- a mounting block, comprising a housing member having a free internal dimension which substantially matches the corresponding external dimension of said body section and being provided with counter-members for said attachment members as well as with a means for supporting said body section, said mounting block being fixed in connection with a vehicle.

As a solution, a detachable and hitchable towing hook is prior known e.g. from Finnish Patent publications 63187 and 74657.

Patent publication 63187 discloses a complicated leverage-operated detachable and attachable hitch assembly, wherein a towing hook is braced on a retaining device in vertical direction at three points of support, located at a distance from each other in the longitudinal direction of said towing hook to provide the angular points of a triangle, and said points of support being fixed in lateral direction to the retaining device.

Patent publication 74657 discloses a detachable and attachable towing hook that can be hitched to a body section, wherein the attachment is achieved on the one hand by means of conical stop faces provided at various points in the longitudinal direction of said towing hook and on the other hand by means of stop faces located matchingly on the body section as well as by means of an eccentric pin.

Referring to what is described above, the former solution is highly complicated in terms of its principle and design and includes a plurality of different, moveably journalled components. Thus, especially in Nordic conditions, as a result of freezing, soiling and other similar reasons, the solution disclosed in the cited publication has a poor operating and working reliability particularly in difficult conditions.

A solution set forth in the latter publication is simple in terms of its operating and working principle. A weakness in this solution is, however, that, with a towing hook under stress, due to the disposition of stop faces, the highest load will be applied to a stop face located at the wedge-like tapering end of said towing hook. Thus, in principle, the towing hook is at its narrowest within the area of the most severe stress which in practice, as a result of high surface tensions, leads to the wearing of stop faces and, hence, to the slackening of the structure.

A common feature in both of the above solutions is the inclusion of movably articulated mechanisms, which are hazardous factors in terms of safety. Furthermore, in order to electrically couple a trailing apparatus, such as a caravan or a like, to a vehicle, the above solutions require totally separate installations, as there are no suitable attachment surfaces included in themselves.

An object of a hitch assembly of the invention, including a detachable towing hook, is to provide a decisive improvement to the above drawbacks and, thus, to substantially raise the available prior art. In order to achieve this object, a hitch assembly of the invention, including a detachable towing hook, is substantially characterized in that, following the insertion of a towing hook and a mounting block within each other, the longitudinal direction of said towing hook being substantially different from that of the mounting block, the attachment thereof to each other, in view of bringing the hitch assembly to an operative position, is adapted to be effected by changing at least one of said longitudinal directions substantially in a single direction around a tipping centre which consists of at least some of the attachment members and corresponding counter-members, whereafter, in order to achieve said operative position, the towing hook and the mounting block are hitchable to each other as the longitudinal directions coincide, whereby at least a part of the body section and said means as well as the attachment members and the counter-members are in contact with each other and whereby the detachment of said towing hook and mounting block from each other is adapted to be effected in reversed order.

The most significant benefits offered by a hitch assembly of the invention include simplicity, reliability in working and operation, which are essential features especially in demanding conditions. In terms of safety, the hitch assembly is substantially improved over the current mechanisms, since the attachment and locking or hitching of a towing hook is achieved by means of fixed components without pivotable spring, cam or like mechanisms.

The invention will be described in detail in the following specification with reference made to the accompanying drawings, in which
- fig. 1: shows a perspective view of one embodiment of a hitch assembly attached to an auxiliary frame,
- fig. 2: shows the hitch assembly of fig. 1 in a condition with a towing hook detached,
- fig. 3: is a sectional view showing the insertion of a towing hook inside a mounting block,
- fig. 4: shows a sectional view of a towing hook in a position required by the operative condition of a hitch assembly,
- fig. 5: is a sectional view showing a hitch assembly in its operative position, and
- fig. 6: shows a side view of an embodiment provided with a spring-structured locking means.

A hitch assembly of the invention includes a detachable towing hook 1 and a mounting block 7. In the illustrated embodiment, said detachable towing hook 1 comprises a body section 2 provided with a towing ball 2a and further with attachment members 4a, the latter comprising two vertical slots 4a1 on the opposite side faces of body section 2 and extending perpendicularly to the longitudinal direction Kv of body section 2 and a single horizontal plate 4a2 extending beyond the side face of body section 2 and perpendicularly to the longitudinal direction Kv of body section 2. The mounting block 7 includes counter-members 4b, comprising pins 4b1 fitting in connection with said slots 4a1 in the operative position of hitch 1, 7 and limiting the longitudinal movement Kv of towing hook 1 as well as plates 4b2 fitting in connection with said plate 4a2 and provided with a wedge assembly 4d, the latter limiting the movement of towing hook 1 in horizontal plane. The mounting block 7 also includes a bearing surface 4c which supports body section 2 in said operative position.

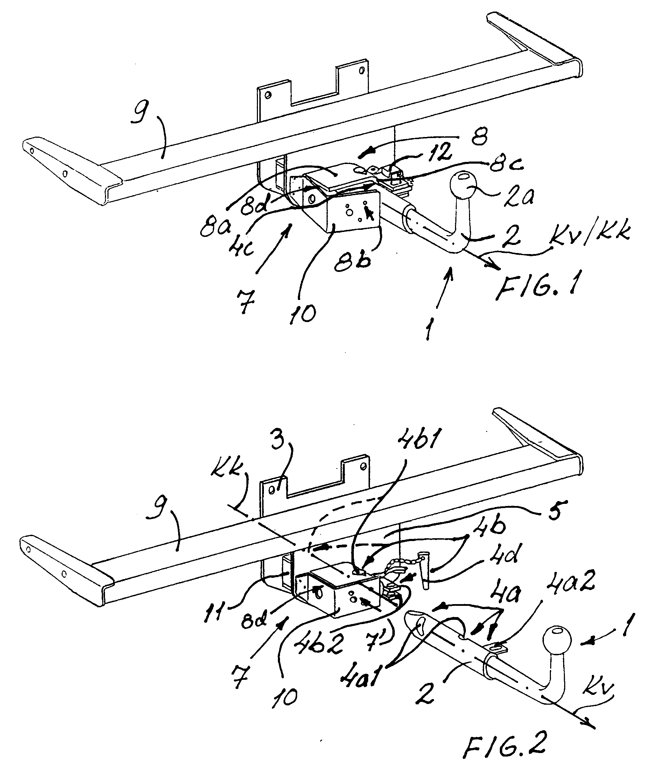

The mounting block 7 of a hitch assembly 1, 7 shown in fig. 1 is attached in an operatively horizontal position to a separate auxiliary frame or chassis 9 fastened to the body of a vehicle, said attachment being effected on the one hand by means of a base plate 3 substantially closing one end of mounting block 7 and on the other hand by means of a second identically directed support plate 5, located at another point in the longitudinal direction Kk of mounting block 7 extending perpendicularly to auxiliary frame 9. The mounting blcok 7 includes a housing or box member 8 having its top portion 8a, bottom portion 8b and one of its side portions 8c manufactured from a continuous sheet material by bending or in a like manner and the side portion between said base plate 3 and support plate 5 in said box member 8 is made up by a separate plate 11 welded to box member 8. The hitch assembly 1, 7 also includes a swingable protective cover 10, serving as a protection element and provided with a return spring and capable of being provided with a cross-connection device for electric coupling. As a locking member said hitch assembly 1, 7 includes a wedge 4d, whose retaining position is secured by providing said mounting block 7 with a safety catch 12 pivoting on top of said wedge 4d.

Fig. 1 shows a hitch assembly 1, 7 in an operative position with a towing hook 1 fastened to a mounting block 7 in a totally immovable manner. Thus, the movement of towing hook 1 is restricted in vertical direction by the top portion 8a and bottom portion 8b of box member 8, in lateral direction by pins 4b1, side portion 8c of the box member and wedge 4d, and in axial direction Kv by pins 4b1 and wedge 4d, said bearing surface 4c comprising the internal surface of said side portion 8c, located between top portion 8a and bottom portion 8b and having a curvature that matches the outer diameter of body section 2.

In fig. 2, the mounting block 7 of hitch assembly 1, 7 is in a preparatory position, wherein the action of a return spring causes a protective cover 10 to close the box member in side portion 8d as well as one end 7' of mounting block 7. In the illustrated embodiment, said body section 2 of towing hook 1 is made of a contimuous material rod with a circular cross-section and its end facing the attachment members is designed to facilitate its introduction into said mounting block 7.

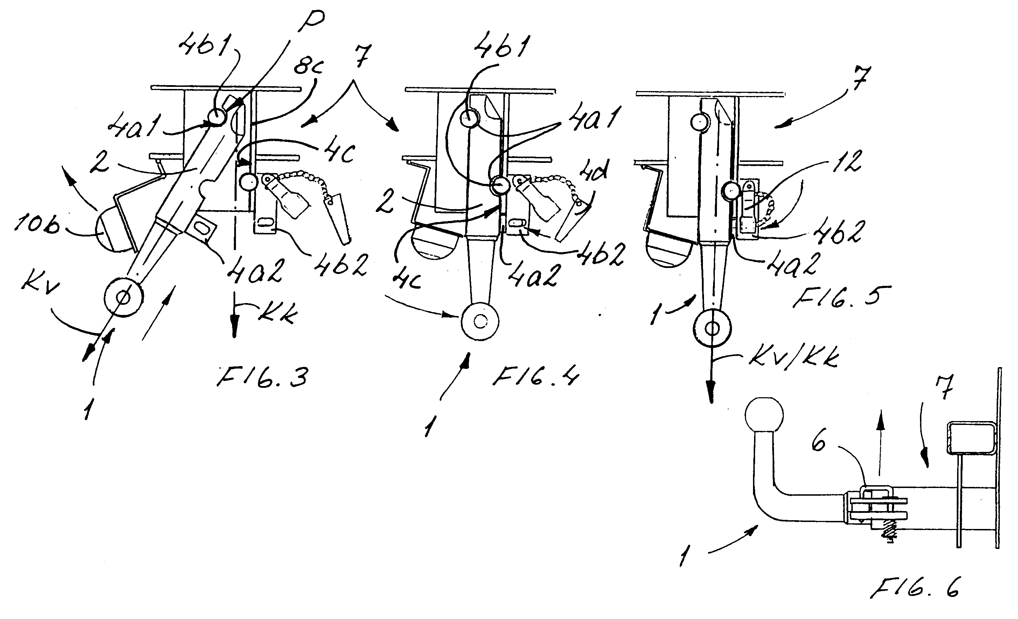

Figs. 3, 4 and 5 illustrate sequentially how a hitch assembly 1, 7 fitted with a cross-connection device 10b is set in an operative position. Fig. 3 shows a first sequence in which said towing hook 1 is introduced inside mounting block 7 in a manner that the foremost slot 4a1 at the end of towing hook 1 facing the attachment members produces a pivot P together with the respective foremost pin 4b1.

In fig. 4, the towing hook 1 is pivoted in horizontal plane in a manner that both slots 4a1 are in contact with pins 4b1, plate 4a2 respectively with plates 4b2, and the body section 2 of towing hook 1 with bearing surface 4c.

Fig. 5 shows the hitch assembly 1, 7 in an operative position, whereby the wedge 4d fitted in holes made in plates 4a2 and 4b2 provides for a final locking of towing hook 1 and mounting block 7 to each other. The purpose of safety catch 12 is to prevent the disengagement of wedge 4d as a result of vibration or the like.

Fig. 6 shows one embodiment of an alternative locking arrangement, wherein a wedge 4d is replaced by a spring-equipped locking lever 6. In this case, the locking and releasing of towing hook 1 and mounting block 7 is effected by lifting said locking lever 6.

The disengagement of towing hook 1 from mounting block 7 is naturally effected in a reversed order with respect to what is described above.

The invention is not limited to the above embodiment but it can be subjected to considerable modifications. For example, a mounting block can be adapted to be fastened in an inclined position, whereby the longitudinal direction of a mounting block forms a certain angle relative to horizontal plane and whereby, accordingly, the body section of a towing hook is given a corresponding change of direction. On the other hand, a mounting block can be adapted to be pivotably mounted on its base, whereby the attachment of a towing hook and a mounting block to each other is achieved by substantially changing the longitudinal direction of a mounting block. According to the invention, a mounting block can naturally be also adapted to be mounted on its base e.g. in a functionally vertical direction in a position rotated relative to the above embodiment, the attachment of a towing hook to a mounting block being effected by moving said towing hook in vertical direction, e.g. from up downwards, and said towing hook attachment members being respectively located on the top and/or bottom faces of a body section. A laterally extending plate or a like included in the towing hook attachment members can of course be located just as well on the side of a towing hook, whereby its stop face can be made up by the top portion of a box member. The wedge assembly serving as a locking means can also be replaced in a per se known manner by a tension-spring equipped retaining pin, whereby a hole thus serving as an attachment member can be made directly in the surface of a towing hook. The mounting block can also be manufactured as an integral unit, e.g. by casting. The towing hook or part of its body section can be manufactured from material rods or the like of various cross-sections, and the same applies also to the pins serving as counter-members. The constructional simplicity of a hitch assembly of the invention facilitates the use of most diversified materials and techniques in the manufacture of its related components.

## Claims

1. A vehicle hitch assembly, including a detachable towing hook (1) for coupling a caravan, a trailer or a like towable apparatus to a vehicle, comprising:
- said towing hook (1) whose body section (2) is provided on the one hand with attachment members (4a) for coupling the towing hook (1) detachably in connection with a vehicle and on the other hand with a towing ball (20) or a like, said attachment members (4a) included in body section (2) being located at a distance from each other in the longitudinal direction (Kv) of body section (2), and
- a mounting block (7), comprising a housing or box member (8) having a free internal dimension which substantially matches the corresponding external dimension of said body section (2) and being provided with counter-members (4b) for said attachment members (4a) as well as with a means (4c) for supporting said body section (2), said mounting block (7) being fixed in connection with a vehicle,
**characterized in that** said towing hook (1) and mounting block (7) are insertable within each other with the longitudinal direction (Kv) of towing hook (1) being substantially different from that (Kk) of mounting block (7), and that one of the attachment members (4a) together with the corresponding counter-member (4b) forms a tipping centre (P) for changing the longitudinal direction (Kv) of towing hook (1) around said tipping centre (P) to make the longitudinal directions (Kk, Kv) to coincide, the distance of the tipping centre from a part of body section (2) and said supporting means (4c) as well as from the other attachment member (4a) and corresponding counter-member (4b) being such that pivoting the longitudinal direction (Kv) around the tipping centre (P) brings them in contact with each other to hitch said towing hook (1) and mounting block (7) to each other, said contact limiting the movement of said body section (2) in its longitudinal direction (Kv), the detachment of said towing hook (1) and mounting block (7) being adapted to be effected in reversed order.

2. A hitch assembly (1, 7) as set forth in claim 1, **characterized** in that setting the hitch assembly (1, 7) in said operative position is adapted to be effected in a substantially horizontal direction, said attachment members (4a) included in body section (2) of towing hook (1) comprising on the one hand at least one recess surface, such as a slot (4a1) or a like, located on the side face or a part of the side face of body section (2) and preferably extending perpendicularly to the longitudinal direction (Kv) of said body section (2) and, on the other hand, at least one extension, such as a plate (4a2) or a like, preferably extending beyond the side face of body section (2) and perpendicularly to the longitudinal direction (Kv) of body section (2), and said counter-members (4b) included in box member (8) of mounting block (7) comprising on the one hand a projecting surface, such as a pin (4b1) or a like, setting in said operative position in contact with said recess surface, such as said slot (4a1) or a like, and limiting the longitudinal (Kv) movement of towing hook (1) and, on the other hand, at least one stop face, such as a plate (4b2) or a like, setting in contact with said extension, such as said plate (4a2) or a like, said mounting block (7) also comprising a bearing surface (4c) or a like, serving as said means for supporting body section (2) and having a configuration which substantially matches the corresponding top and bottom surfaces or parts thereof as well as at least one of the side faces or a part thereof included in the body section whereby, in order to lock or hitch towing hook (1) and mounting block (7) to each other, said extension, such as plate (4a2) or a like, and said stop face, such as plate (4b2) or a like, include a locking means, such as a wedge assembly (4d) or a like, limiting the movement of towing hook (1) at least in a substantially horizontal plane.

3. A hitch assembly as set forth in claim 1 or 2, **characterized** in that said attachment members (4a) comprise two of said recess surfaces, such as slots (4a1) or the like, which are located on the opposite faces of body section (2) or on parts thereof and preferably at different locations in the longitudinal direction (Kv) of body section (2), said counter-members (4b) comprising extension surfaces, such as pins (4b1) or the like, arranged at the corresponding locations on said box member (8).

4. A hitch assembly as set forth in any of claims 1 - 3, **characterized** in that said mounting block (7) includes a protection member (10) which, in the preparatory position of mounting block (7) with said towing hook (1) detached therefrom, substantially closes at least the outermost end (7') in the longitudinal direction (Kk) of mounting block (7).

5. A hitch assembly as set forth in claim 4, **characterized** in that said protection member comprises a pivotable plate structure (10) or a like, which is provided with a continous-action closing means, such as a spring (10a) or a like.

6. A hitch assembly as set forth in claim 4 or 5, **characterized** in that said protection member (10) comprises a connecting means, such as a cross-connection device (10b) or a like, for electrically coupling a caravan, a trailer or a like towable apparatus to a vehicle.

7. A hitch assembly as set forth in any of preceding claims 1 - 3, **characterized** in that said mounting block (7) is preferably adapted to be fastened in a substantially horizontal position, such as to a separate auxiliary frame (9) or a like carried by the body of a vehicle, the longitudinal direction (Kk) of mounting block (7) extending in a substantially horizontal plane, said fastening being preferably effected on the one hand by means of a base plate (3) or a like, closing one of the ends of mounting block (7), and on the other hand by means of a second support plate (5) or a like, placed at a different location in the longitudinal direction (Kk) of mounting block (7) and preferably extending in the corresponding direction.

8. A hitch assembly as set forth in any of preceding claims 2 - 7, **characterized** in that the box member (8) of said mounting block (7) comprises a top portion (8a), a bottom portion (8b) and at least one side portion (8c), which are made by working, shaping, machining or a like treatment of continuous sheet material, and that said mounting block (7), with the exception of said outermost end (7') thereof and/or the parts closed by said protection member, is preferably designed as a substantially closed plate structure or a like.

9. A hitch assembly as set forth in any of preceding claims 1 - 7, **characterized** in that said box member (8) is manufactured by working or similarly treating a continuous shaped profile, such as a tubular beam or a like.

10. A hitch assembly as set forth in any of preceding claims 1 - 3, **characterized** in that at least said body section (2) of said towing hook (1) is manufactured by shaping, forming, working or by a like treatment of a continuous material rod or a like, having preferably a circular cross-section.

11. A hitch assembly as set forth in any of preceding claims 1 - 9, **characterized** in that the body section (2) of said towing hook (1) comprises at least two components, which are made of continuous rod material, such as hexagonal rod, square rod, circular rod or a like, and which are joined together by welding or a like treatment.

## Patentansprüche

1. Fahrzeugzugvorrichtung mit einem abnehmbaren Zughaken (1) zum Ankuppeln eines Wohnwagens, eines Anhängers oder ähnlichem schleppbaren Gerät an ein Fahrzeug, mit:
- dem Zughaken (1), dessen Grundkörper (2) einerseits mit Befestigungsgliedern (4a) zum lösbaren Verbinden des Zughakens (1) mit einem Fahrzeug und andererseits mit einem Kugelkopf (20) oder dergleichen versehen ist, wobei die Befestigungsglieder (4a) in dem Grundkörper (2) vorgesehen und in Längsrichtung (Kv) des Grundkörpers (2) voneinander beabstandet sind, und
- einem Befestigungsblock (7) mit einem Gehäuse oder Kasten (8), dessen freie innere Abmessung im wesentlichen mit der äußeren Abmessung des Grundkörpers (2) übereinstimmt, und mit Gegengliedern (4b) für die Befestigungsglieder (4a) sowie mit einem Mittel (4c) zum Stützen des Grundkörpers (2) versehen ist, und der Befestigungsblock (7) fest mit einem Fahrzeug verbindbar ist,
**dadurch gekennzeichnet, daß** der Zughaken (1) und der Befestigungsblock (7) in Längsrichtung (Kv) des Zughakens (1), die im wesentlichen von der Längsrichtung (Kk) des Befestigungsblocks (7) abweicht, ineinander steckbar sind, und daß eines der Befestigungsglieder (4a) zusammen mit dem zugehörigen Gegenglied (4b) einen Schwenkpunkt (P) bildet, zum ändern der Längsrichtung (Kv) des Zughakens (1) um diesen Schwenkpunkt (P), um die Längsrichtungen (Kk, Kv) zur Deckung zu bringen, wobei der Abstand des Schwenkpunkts (P) von einem Teil des Grundkörpers (2) und dem Stützmittel (4c) sowie von dem anderen Befestigungsglied (4a) und zugehörigem Gegenglied (4b) so ist, daß eine Drehung der Längsrichtung (Kv) um den Schwenkpunkt (P) diese miteinander in Kontakt bringt, um den Zughaken (1) und den Befestigungsblock (7) festzuhaken, wobei dieser Kontakt die Bewegung des Grundkörpers in seiner Längsrichtung (Kv) begrenzt und das Lösen von Zughaken (1) und Befestigungsblock (7) in umgekehrter Reihenfolge bewirkbar ist.

2. Zugvorrichtung (1,7) nach Anspruch 1, **dadurch gekennzeichnet**, **daß** das Einsetzen der Zugvorrichtung in die Betriebslage im wesentlichen in horizontaler Richtung bewirkbar ist, die im Grundkörper (2) des Zughakens (1) vorgesehenen Befestigungsglieder (4a) einerseits mindestens eine ausgesparte Fläche, wie einen Schlitz (4a1) oder dergleichen, die an der Seitenfläche oder einem Teil der Seitenfläche des Grundkörpers (2) vorgesehen ist und vorzugsweise senkrecht zur Längsrichtung (Kv) des Grundkörpers (2) verläuft, aufweisen und andererseits mindestens einen Vorsprung, wie eine Platte (4a2) oder dergleichen, sich vorzugsweise jenseits der Seitenwand des Grundkörpers (2) und senkrecht zur Längsrichtung (Kv) des Grundkörpers (2) erstreckend, aufweisen, wobei die in dem Kasten (8) des Befestigungsblocks (7) vorgesehenen Gegenglieder (4b) einerseits eine hervorstehende Fläche, wie einen Stift (4b1) oder dergleichen, die in der Betriebslage mit der ausgesparten Fläche, wie dem Schlitz (4a1) oder dergleichen in Kontakt steht und die Längsbewegung (Kv) des Zughakens (1) begrenzt, aufweisen, und andererseits mindestens eine Anschlagfläche, wie eine Platte (4b2) oder dergleichen, die mit dem Vorsprung, wie der Platte (4a2) oder dergleichen, in Kontakt steht, aufweisen, wobei der Befestigungsblock (7) außerdem eine Arbeitsfläche (4c) oder dergleichen aufweist, die als Stützmittel für den Grundkörper (2) dient und eine Ausbildung besitzt, die im wesentlichen mit der Decken- und Bodenfläche oder Teilen davon sowie mit mindestens einer der Seitenflächen oder deren Teilen des Grundkörpers (2) übereinstimmt, wobei dieser Vorsprung, wie die Platte (4a2) oder dergleichen, ein Verriegelungsmittel, wie einen Keil (4d) oder dergleichen umfaßt, das die Bewegung des Zughakens (1) mindestens in einer horizontalen Ebene begrenzt, um den Zughaken (1) und den Befestigungsblock (7) miteinander zu verriegeln oder einzuhaken.

3. Zugvorrichtung nach Anspruch 1 oder 2, **dadurch gekennzeichnet, daß** die Befestigungsglieder (4a) zwei der ausgesparten Flächen, wie Schlitze (4a1) oder dergleichen, aufweisen, die auf entgegengesetzten Seiten des Grundkörpers (2) oder Teilen davon und vorzugsweise an unterschiedlichen Stellen in Längsrichtung (Kv) des Grundkörpers (2) vorgesehen sind und die Gegenglieder (4b) hervorstehende Flächen, wie Stifte (4b1) oder dergleichen, aufweisen, die an korrespondierenden Stellen an dem Kasten (8) angeordnet sind.

4. Zugvorrichtung nach einem der Ansprüche 1 bis 3, **dadurch gekennzeichnet, daß** der Befestigungsblock (7) ein Schutzglied (10) aufweist, das in der vorbereitenden Stellung des Befestigungsblockes (7) mit dem davon abgenommenen Zughaken (1) im wesentlichen zumindest das äußerste Ende (7') in Längsrichtung (Kk) des Befestigungsblocks (7) verschließt.

5. Zugvorrichtung nach Anspruch 4, **dadurch gekennzeichnet**, **daß** das Schutzglied eine drehbare Plattenkonstruktion (10) oder dergleichen ist, die mit einem kontinuierlich wirkenden Verschlußmittel, wie einer Feder (10a) oder dergleichen, versehen ist.

6. Zugvorrichtung nach Anspruch 4 oder 5, **dadurch gekennzeichnet, daß** das Schutzglied (10) ein Verbindungsmittel, wie eine Zwischenschalteinrichtung (10b) oder dergleichen, zum elektrischen Ankuppeln eines Wohnwagens, eines Anhängers oder ähnlichem schleppbaren Gerät an ein Fahrzeug, aufweist.

7. Zugvorrichtung nach einem der Ansprüche 1 bis 3, **dadurch gekennzeichnet, daß** der Befestigungsblock (7) vorzugsweise in im wesentlichen horizontaler Lage befestigbar ist, wie durch einen separaten Hilfsrahmen (9) oder dergleichen, der durch das Fahrzeug-Fahrgestell getragen wird, die Längsrichtung (Kk) des Befestigungsblocks (7) sich im wesentlichen in einer horizontalen Ebene erstreckt, das Befestigen vorzugsweise einerseits durch eine Grundplatte (3) oder dergleichen, die ein Ende des Befestigungsblocks (7) verschließt, und andererseits durch eine zweite Stützplatte (5) oder dergleichen bewirkbar ist, die an unterschiedlichen Stellen in Längsrichtung (Kk) des Befestigungsblocks (7) angeordnet sind und sich vorzugsweise in korrespondierender Richtung erstrecken.

8. Zugvorrichtung nach einem der vorstehenden Ansprüche 2 bis 7, **dadurch gekennzeichnet, daß** der Kasten (8) des Befestigungsblockes (7) einen Deckenabschnitt (8a), einen Bodenabschnitt (8b) und mindestens einen Seitenabschnitt (8c) aufweist, die durch Bearbeiten, Formgeben, spanabhebende Formgebung oder eine ähnliche Behandlung aus endlosem Blech hergestellt sind, und der Befestigungsblock (7) mit Ausnahme dessen äußeren Endes (7') und/oder der durch das Schutzglied verschlossenen Teile als vorzugsweise im wesentlichen geschlossenes Plattengebilde oder dergleichen gestaltet ist.

9. Zugvorrichtung nach einem der vorstehenden Ansprüche 1 bis 7, **dadurch gekennzeichnet, daß** der Kasten (8) durch Bearbeiten oder ähnliche Behandlung eines nahtlos geformten Profils, wie einem rohrförmigen Träger oder dergleichen, hergestellt ist.

10. Zugvorrichtung nach einem der Ansprüche 1 bis 3, **dadurch gekennzeichnet, daß** mindestens der Grundkörper (2) des Zughakens (1) durch spanabhebende Formgebung, Formgeben oder Bearbeiten oder durch eine ähnliche Behandlung aus einem endlosen Materialstrang oder dergleichen mit einem vorzugsweise runden Querschnitt hergestellt ist.

11. Zugvorrichtung nach einem der Ansprüche 1 bis 9, **dadurch gekennzeichnet, daß** der Grundkörper (2) des Zughakens (1) mindestens zwei Bestandteile umfaßt, die aus unendlichem Stangenmaterial, wie einer hexagonalen Stange, quadratischen Stange, runden Stange oder dergleichen hergestellt sind und durch Schweißen oder eine ähnliche Behandlung verbunden wurden.

## Revendications

1. Ensemble d'attelage de véhicule, incluant un crochet de remorquage amovible (1) pour accoupler une caravane, une remorque ou autre dispositif remorquable analogue à un véhicule, comprenant :
- ledit crochet de remorquage (1) dont le tronçon formant corps (2) est muni, d'une part, d'organes d'attache (4a) pour accoupler le crochet de remorquage (1) de manière amovible en liaison avec un véhicule et, d'autre part, d'une boule de remorquage (20) ou analogue, lesdits organes d'attache (4a) appartenant au tronçon formant corps (2) étant situés à distance l'un de l'autre selon la direction longitudinale (Kv) du tronçon formant corps (2), et
- un bloc de montage (7) comprenant un organe formant boîtier ou logement (8) ayant une dimension intérieure libre qui correspond sensiblement à la dimension extérieure correspondante du tronçon formant corps (2) et étant muni de contre-organes (4b) pour lesdits organes d'attache (4a) ainsi que d'un moyen (4c) pour supporter ledit tronçon formant corps (2), le bloc de montage (7) étant fixe en liaison avec un véhicule,
caractérisé en ce que le crochet de remorquage (1) et le bloc de montage (7) peuvent être insérés l'un dans l'autre avec la direction longitudinale (Kv) du crochet de remorquage (1) étant sensiblement différente de celle (Kk) du bloc de montage (7), et en ce que l'un des organes d'attache (4a) ensemble avec le contre-organe correspondant (4b) forme un centre de basculement (P) pour changer la direction longitudinale (Kv) du crochet de remorquage (1) autour de ce centre de basculement (P) pour faire coïncider les directions longitudinales (Kk, Kv), la distance du centre de basculement à partir d'une partie du tronçon formant corps (2) et desdits moyens de support (4c), ainsi qu'à partir de l'autre organe d'attache (4a) et du contre-organe correspondant (4b), étant telle que le pivotement de la direction longitudinale (Kv) autour du centre de basculement (P) les amène en contact l'un avec l'autre pour atteler le crochet de remorquage (1) et le bloc de montage (7) l'un à l'autre, ledit contact limitant le mouvement du tronçon formant corps (2) dans sa direction longitudinale (Kv), le démontage du crochet de remorquage (1) et du bloc de montage (7) étant adapté à être effectué dans l'ordre inverse.

2. Ensemble d'attelage (1, 7) selon la revendication 1, caractérisé en ce que la mise de l'ensemble d'attelage (1, 7) dans ladite position opérationnelle est adaptée à être effectuée dans une direction sensiblement horizontale, les organes d'attache (4a) appartenant au tronçon formant corps (2) du crochet de remorquage (1) comprenant d'une part au moins une surface évidée, telle qu'une rainure (4a1) ou analogue, située sur la face latérale ou une partie de la face latérale du tronçon formant corps (2) et s'étendant de préférence perpendiculairement à la direction longitudinale (Kv) du tronçon formant corps (2) et, d'autre part, au moins un appendice, tel qu'une plaque (4a2) ou analogue, s'étendant de préférence au-delà de la face latérale du tronçon formant corps (2) et perpendiculairement à la direction longitudinale (Kv) du tronçon formant corps (2), et les contre-organes (4b) appartenant à l'organe formant boîtier (8) du bloc de montage (7) comprenant d'une part une surface saillante, telle qu'un ergot (4b1) ou analogue, se plaçant dans ladite position opérationnelle en contact avec ladite surface évidée, telle que ladite rainure (4a1) ou analogue, et limitant le mouvement longitudinal (Kv) du crochet de remorquage (1) et, d'autre part, au moins une surface de butée, telle qu'une plaque (4b2) ou analogue, se plaçant en contact avec ledit appendice tel que ladite plaque (4a2) ou analogue, le bloc de montage (7) comprenant également une surface d'appui (4c) ou analogue, servant de moyen précité pour supporter le tronçon formant corps (2) et ayant une configuration qui correspond sensiblement aux surfaces de sommet et de base ou parties de celles-ci ainsi qu'à au moins une des faces latérales ou une partie de celle-ci appartenant au tronçon formant corps de sorte que, de façon à verrouiller ou à atteler le crochet de remorquage (1) et le bloc de montage (7) l'un à l'autre, ledit appendice tel que plaque (4a2) ou analogue et ladite face de butée, telle que plaque (4b2) ou analogue, inclut un moyen de verrouillage, tel qu'un assemblage à coin (4d) ou analogue, limitant le mouvement du crochet de remorquage (1) au moins dans un plan sensiblement horizontal.

3. Ensemble d'attelage selon la revendication 1 ou 2, caractérisé en ce que les organes d'attache (4a) comprennent deux surfaces évidées précitées, telles que rainures (4a1) ou analogues, qui sont situées sur les faces opposées du tronçon formant corps (2) ou sur des parties de celles-ci et de préférence en des emplacements différents selon la direction longitudinale (Kv) du tronçon formant corps (2), les contre-organes (4b) comprenant des surfaces formant appendices, telles que des ergots (4b1) ou analogues, agencés en des emplacements correspondants sur l'organe formant boîtier (8).

4. Ensemble d'attelage selon l'une quelconque des revendications 1 à 3, caractérisé en ce que le bloc de montage (7) comprend un organe de protection (10) qui, dans la position préparatoire du bloc de montage (7) avec le crochet d'attelage (1) détaché de celui-ci, ferme sensiblement au moins l'extrémité la plus externe (7') dans la direction longitudinale (Kk) du bloc de montage (7).

5. Ensemble d'attelage selon la revendication 4, caractérisé en ce que l'organe de protection comprend une structure à plaque pivotante (10) ou analogue, qui est munie d'un moyen de fermeture à action continue, tel qu'un ressort (10a) ou analogue.

6. Ensemble d'attelage selon la revendication 4 ou 5, caractérisé en ce que l'organe de protection (10) comprend un moyen de connexion, tel qu'un dispositif de branchement (10b) ou analogue, pour accoupler électriquement une caravane, une remorque ou dispositif remorquable analogue à un véhicule.

7. Ensemble d'attelage selon l'une quelconque des revendications précédentes 1 à 3, caractérisé en ce que le bloc de montage (7) est de préférence adapté à être fixé dans une position sensiblement horizontale, tel qu'à un châssis auxiliaire séparé (9) ou analogue porté par la caisse du véhicule, la direction longitudinale (Kk) du bloc de montage (7) s'étendant dans un plan sensiblement horizontal, ladite fixation étant de préférence effectuée d'une part au moyen d'une plaque de base (3) ou analogue, fermant l'une des extrémités du bloc de montage (7), et d'autre part au moyen d'une seconde plaque support (5) ou analogue, placée en un endroit différent selon la direction longitudinale (Kk) du bloc de montage (7) et s'étendant de préférence dans la direction correspondante.

8. Ensemble d'attelage selon l'une quelconque des revendications précédentes 2 à 7, caractérisé en ce que l'organe formant boîtier (8) du bloc de montage (7) comprend une partie supérieure (8a), une partie inférieure (8b) et au moins une partie latérale (8c), qui sont réalisées en travaillant, formant, usinant ou traitant de manière analogue un matériau en feuille continu, et en ce que le bloc de montage (7), à l'exception de son extrémité précitée la plus externe (7') et/ou les parties fermées par ledit organe de protection, est de préférence conçu comme une structure en plaque sensiblement fermée ou analogue.

9. Ensemble d'attelage selon l'une quelconque des revendications précédentes 1 à 7, caractérisé en ce que l'organe formant boîtier (8) est fabriqué en travaillant ou traitant de manière similaire un profilé conformé continu, tel qu'une poutre tubulaire ou analogue.

10. Ensemble d'attelage selon l'une quelconque des revendications précédentes 1 à 3, caractérisé en ce qu'au moins le tronçon formant corps (2) du crochet de remorquage (1) est fabriqué en façonnant, formant, travaillant ou en traitant de manière analogue une tige en matériau continu ou analogue ayant de préférence une section transversale circulaire.

11. Ensemble d'attelage selon l'une quelconque des revendications précédentes 1 à 9, caractérisé en ce que le tronçon formant corps (2) du crochet de remorquage (1) comprend au moins deux composants, qui sont constitués de matériau continu en tige, tel que de la tige hexagonale, de la tige carrée, de la tige circulaire ou analogue et qui sont assemblés par soudure ou traitement analogue.
